# EUROPEAN PATENT APPLICATION

(11) **EP 0 887 144 A2**
(43) Date of publication of application: **30.12.1998**
(21) Application number: 98111776.5
(22) Date of filing: 26.06.1998
(51) Int. Cl.: B23K 37/04, B23D 65/00

(54) **Bandsaw welding method and device**

(30) Priority: 30.06.1997 US 885349
(71) Applicant: SANDVIK AKTIEBOLAG, 811 81 Sandviken (SE)
(72) Inventor: Hellbergh, Hakan, Branford, CT 06405 (US)
(74) Representative: Taquist, Lennart

(57) **Abstract**

Device and method for aligning bandsaw strip ends prior to welding, comprising a work table (15), movable blade holders (13,14), displacement sensors (16-21), a calculating unit (24) which from the sensor measurements calculates the position, direction and curvature of each strip end (11,12) at the weld line, and a display showing whether the difference of position and direction between the strip ends at the weld line is within predetermined limits.

## Description

### Background

Bandsaw blades are generally made by welding appropriate lengths of toothed steel strips to loops fitting a bandsaw machine. In the bandsaw machine the bandsaw blade runs over two large pulleys, and sawing of the work material occurs along one of the straight stretches approximately midway between the pulleys. For narrow bandsaw blades such as used for sawing metal and in the furniture industry, the resistance to torsion is so low, that it is necessary to have saw blade guides just below and above the work material, supporting the bandsaw blade on the sides as well as on the rear toothless edge. For proper operation it is important that the welded joint is as straight as the rest of the bandsaw blade, with no step or angular change.

In many cases the toothed strip is manufactured straight, and aligning the ends before welding is then easy. With modern high strain bandsaws, especially for metal sawing, the strip is deliberately made with a slightly shorter rear edge to offset the effect of letting the toothed front edge run outside the pulleys. This makes the band have a curvature in its plane, called camber, when it is not under tension in the machine. The amount of camber may be chosen with reference to the width of the strip and the expected work load. This makes alignment of the strip ends very difficult.

The present invention is a method and a device for ensuring that the strip ends are aligned as to position and direction when welding them together to make a bandsaw blade.

### Description

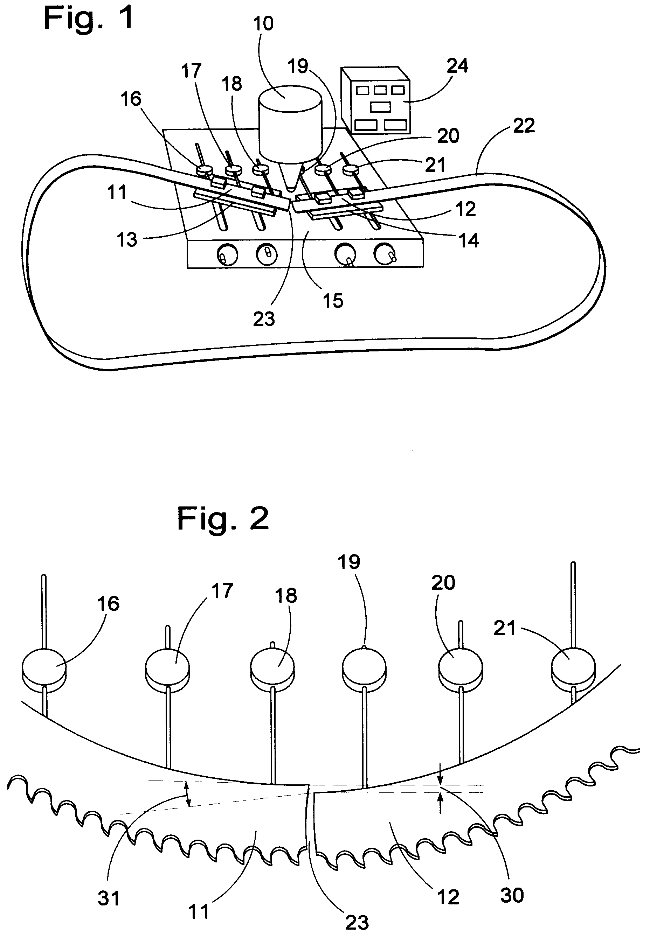

The invention is described with reference to the figures, where figure 1 shows a table for welding and measuring, and figure 2 a close-up of the rear edges of the strip ends where they meet at the weld line.

According to the invention, each strip end (11,12) is clamped to a holder (13,14) which is movable on a measuring table (15), on which there are six linear measuring instruments (16-21), each measuring the lateral displacement of a point on the rear edge (22) of the strip relative to a baseline on the table. The instruments are arranged symmetrically with respect to a weld line (23) where the strip ends (11,12) meet below the welding head (10), three on each strip end. The readout of the instruments is connected to a common computing and display unit (24).

For each strip end, it is assumed that the camber is constant from the weld line (23) to the most distant measuring point. With known measuring points, the computing unit can then calculate for each strip end its camber, its angular deviation from the baseline at the weld line and its lateral displacement from the baseline at the weldline. From those it can compute the angular difference (31) and the lateral difference (30) at the weld line (23). The holders (13,14) can then be manipulated until the differences are zero or smaller than specified tolerances. The manipulating can be done by hand guided by a display (24), or automatically.

As a check, the camber of both strip ends can also be displayed, to warn the operator if there is a large difference which may indicate uneven strip properties.

As shown in figure 2 the measuring instruments (16-21) are used to measure the position of the rear edge of the strip ends at six measuring points, symmetrically located relative to the weld line (23), but not necessarily at even intervals. The position, direction and camber of the left strip end (11) are calculated from the measurements of the three instruments (16-18) to the left as a linear sum with weights depending on the distances from the weld line (23). For the right strip end (12) the position, direction and camber are calculated from measurements of the three instruments (19-21) to the right in the same way.

The weight of each measurement can be easily calculated when the intervals between the measuring instruments are known. As an example, if the distances from the weld line are 1, 2 and 3 units, the position at the weld is calculated as $\text{3 A - 3 B + C}$, the direction at the weld as $\text{-2.5 A + 4 B - 1.5 C}$, and the camber as $\text{0.5 A - B + 0.5 C}$ where A, B and C are the measurements. For best accuracy it is desirable to put the middle instrument (17,20) on each strip end not midway between the others, but slightly closer to the weld line, the exact amount depending on how a directional misfit is rated compared to a positional step. This will alter the relative weights somewhat. Using a higher precision instrument at the inner positions (18,19) closest to the weld line also improves the accuracy. Preferably, the middle instrument (17,20) should be located at a distance from the inner instruments (18,19) of 33 to 50 % of the distance between inner (18,19) and outer (16,21) instruments.

The measurements can be conveyed to the display unit (24) as analog or digital signals. The display should preferably use digital numbers, accompanied by green and red lights to indicate whether the strip ends are meeting each other at the weld line with better or worse fit than a preset limit. The limits can be varied depending on the dimensions and intended use of the bandsaw.

Certain simplifications can be made within the concept. If the camber can be assumed to be equal for both strip ends, two measuring points, preferably those at the inner positions, can be made as fixed precision support points and used as reference points for the active measuring points, and the camber may be measured for only one of the strip ends, requiring a total of two fixed support points and at least three active measuring points.

## Claims

1. Method for aligning two bandsaw strip ends prior to welding at a weld line, characterized by measuring the position, the direction and the camber of the regions adjoining the strip ends, calculating as linear combinations of those measurements the position and direction of the strip end where it reaches the weld line assuming that each strip end has constant curvature from the weld line past the measuring points, calculating and displaying the differences in position and direction of the two strip ends, and manipulating at least one strip end until the differences are less than a predetermined limit.

2. Method according to claim 1, characterized by the measuring being done at an edge of the strips at at least five points, at least three of which should measure displacements from a reference line, and at most two may be fixed points defining the reference line.

3. Method according to claim 2, characterized by calculating and displaying the curvature of each strip end using six measuring points.

4. Method according to claim 2, characterized by the measuring points of the two strip ends being symmetrically located with respect to the weld line.

5. Method according to claim 4, characterized by the middle measuring point on each strip end being closer to the inner measuring point than to the outer measuring point.

6. Method according to claim 2, characterized by using three measuring point on one strip end and two measuring point on the other, assuming that the curvature is similar.

7. Alignement device for use prior to welding of two bandsaw strip ends at a weld line, comprising a work table, blade holders with clamps, displacement sensors and a calculating unit with displays, characterized by each strip end having displacement sensors measuring the position and the direction and by at least one strip end having displacement sensors measuring the curvature, electric conductors transferring the position information to the calculating unit, and displays showing at least the difference in position and direction at the weld line as calculated from the position measurements at the measuring points.

8. Alignement device according to claim 7, characterized by the display comprising lights indicating whether the differences are within preset limits.

9. Alignment device according to claim 7, characterized by the holders being manipulated by hand operated mechanisms.

10. Alignement device according to claim 7, characterized by the holders being manipulated by electric motors controlled by the calculating unit until the differences are within the preset limits.
